# EUROPEAN PATENT SPECIFICATION

(11) **EP 3 651 565 B1**
(45) Date of publication and mention of the grant of the patent: **01.09.2021**
(21) Application number: 18752263.6
(22) Date of filing: 10.07.2018
(51) Int. Cl.: A01G 31/02

(54) **METHOD AND PLANT FOR HARVESTING AND POST-PRODUCTION PACKAGING OF LEAFY CROPS BY HYDROPONIC TECHNIQUE**
VERFAHREN UND ANLAGE ZUM ERNTEN UND ENDVERPACKEN VON BLATTFÖRMIGEM ERNTEGUT DURCH HYDROPONISCHE TECHNIK
PROCÉDÉ ET INSTALLATION DE RÉCOLTE ET D'EMBALLAGE POST-PRODUCTION DE CULTURES À FEUILLES PAR UNE TECHNIQUE HYDROPONIQUE

(30) Priority: 13.07.2017 IT 201700079080
(43) Date of publication of application: 20.05.2020
(73) Proprietor: Ceschini, Mauro, 37010 Torri del Benaco (VR) (IT)
(72) Inventor: Ceschini, Mauro, 37010 Torri del Benaco (VR) (IT)
(74) Representative: Postiglione, Ferruccio
(86) International application number: PCT/IB2018/055056
(87) International publication number: WO 2019/012407

(56) References cited:
- WO-A1-97/02758
- US-A- 1 708 253
- US-A1- 2013 104 453
- US-A1- 2017 064 912

## Description

### TECHNICAL FIELD

The present invention relates to a method and plant for harvesting and post-production packaging of leafy crops in tufts by hydroponic technique.

More specifically, the present invention refers to a plant and method thereof for harvesting and post-production packaging for 1^{st} class advanced (fresh whole product without any treatment) distribution of leafy crops in greenhouse tufts such as salad, lettuce, basil, rocket, etc. etc. cultivated by an out-of-soil hydroponic technique.

### PRIOR ART STATE

Out-of-soil cultivation techniques known as hydroponics and aeroponics have been known and widespread for long time in the horticulture and food-crop fields, which are used in the cultivation of vegetables, fruit plants and flowers, in particular in leafy crops and tufts plants such as salad plants, lettuce basil, rocket and other types.

These hydroponic and aeroponic out-of-soil cultivation techniques have been initially developed as alternative solutions to problems due to the spontaneous weed flora and to the typical pathologies of crops in the soil and consequently to the necessary use of weed and pest-control products and substances.

Subsequently, out-of-soil cultivation techniques have been gradually affirming also thanks to the ability to increase production yields due to the versatility and greater intensification ease of the latter of the biological production cycles, with a consequent reduction in waiting times between a cycle and the other, and therefore to the expansion of the calendars of the marketing periods of the product.

Among the well-known technical solutions of out-of-soil-based crop systems, which can be adapted to leafy crops such as cutting vegetables, etc., hydroponic systems can be mentioned, for example of the following types:
- Floating System;
- Plant Plane Hydroponics;
- Ebb and Flow;
- aeroponic type;
- NFT or Nutrient Film Tecnique.

All hydroponic cultivation systems are generally based on the continuous or periodically and discontinuous supply of an aqueous solution or an aerosol containing the nutritive and mineral elements necessary for the sustenance of the plants.

These systems can also be open or closed, where in the first case the nutrient aqueous solution is "to lose" while in the second case the aqueous solution is "recycled", that is retrieved, appropriately replenished with the nutrients and minerals and put back into circle in the system.

Hydroponic cultivation systems can also include the presence of a plant cultivation substrate typically made of natural materials, such as peat, coconut fiber, pomace, etc., or other materials such as rock wool, perlite, polyurethane, expanded clay, pumice etc. and such as to configure a porous support substitute for the natural soil. In particular, the cultivation substrate must guarantee an adequate mechanical support of the plant through which the roots are free to grow and must, moreover, retain the nutritive solution and release it at the roots according to the absorption rhythms of the plant. The supporting substrate must also enable an adequate aeration of the roots such to guarantee the correct oxygenation of the plant.

In particular, in cultivation plants with NFT (Nutrient Film Technique) hydroponic systems, of which the technical solution of the present invention forms part, a film of nutritive solution is recirculated inside special channels, generally made of a polymeric material, on which are also housed a plurality of plants advantageously provided with the relative cultivation or supporting substrate. The nutritive solution is pumped from a tank up to the channels where the fluid current comes into contact with the roots of the plant wetting them, after which the solution is retrieved, replenished with the nutrients and put back into circulation in the plant.

The circulation flow of the nutrient solution inside the channel is typically very small and such as to guarantee only a constant film or water film.

Among the various systems of hydroponics, the NFT system is particularly advantageous because it is the one that guarantees greater production capacity per unit of cultivated area since it is the most automatable system by means of the modern moving systems and for controlling the parameters of greenhouse cultivations.

In fact, automated production techniques and processes are also known, such as the MGS (Mobile Gully System) production system , which can be implemented with the typical NFT hydroponic techniques, such production processes enable to obtain increased crop production capacity equal to about eight times any cultivation of leafy crops and tufts on soil, both in greenhouses and in open fields.

In the MGS system, the cultivation production process is completely automated from the first initial steps of transplanting and inserting the seedling in the channels, configured to house the seedling in an initial vegetative stage of about three to four leaves, up to the final steps with the "exit" of the channels, with the plants now ripening, from the production plane of greenhouse cultivation for the following harvesting steps and the post-harvesting processing steps of the produce for final marketing.

The channels, advantageously made of plastic-polymeric material, are typically arranged transversely to the greenhouse and inside the same channels the nutritive aqueous solution containing the fertilizers with nutritional characteristics and specific chemical composition each growth stage of the plant is made flown, in order to increase production in the various steps and to obtain an overall optimization of the entire production process. The cultivation plane is typically a moving plane on which said channels are moved automatically and unidirectionally according to a space-time logic that enables to optimize the density and the space between plant and plant.

Unlike what happens in a conventional cultivation on soil, as a matter of fact, where the plant is placed on the soil plane at a final distance which considers the development of the plant in the last steps, in the MGS system the channels are closer in the early steps of growth and they are progressively distanced with the growth from the plant and its greater space encumbrance.

Furthermore, the MGS production system is particularly advantageous because it can be easily integrated and implemented with conventional automated post-production processing plants, generally located at the exit along the direction of movement of the channels through the greenhouse and which enable to bring the produce, through various manufacturing processes, from the greenhouse to the packaging and distribution depending on the final produce range to be obtained.

The post-production processes start with the harvesting of the produce and the cutting or severing of the plant from the roots and the supporting substrate after which an immediate transfer of the produce takes place in a preservation and cooling environment where it is cooled at a temperature of 1 - 4 ° C, typical temperatures of the so-called cold chain, and where a first qualitative control is also potentially performed to eliminate the not suitable produces and foreign bodies. Subsequently, the produce undergoes further steps of post-production processing (i.e. post-cultivation and growth of the plant or vegetables in the greenhouse) and post-harvesting, which vary depending on the final produce range to be obtained. These post-production steps are performed after harvesting the already cut plant or vegetable, hence no longer vital, and can conventionally be sorting, washing, drying, weighing, packaging and distribution operations. Another harvesting technique is known from WO 09/05758 A1.

Nevertheless, said aforementioned systems and the plants thereof for the post-production processing of hydroponic crops, on highly productive automated plants, have drawbacks and operating limits.

An important limitation of systems and automated plants for post-production processing of hydroponic crops is due to the fact that once the plant is cut and harvested, and then severed from the roots, it is no longer vital and therefore begins the inexorable decay and worsening of the organic properties that guarantee freshness and marketability.

Therefore, all the processing steps following the cutting and severing of the plant, including the transport in the warehouse and the distribution reduce the useful life of the produce for its marketing on the market and for consumption, therefore, the more post-harvesting processing steps are present (products of 1^{st}, 1^{st} advanced, and 4^{th} class), the less time will be useful for the consumption of the produce before its inevitable decay.

Another important limitation of these known post-production processing plants for hydroponic crops is due to the fact that the cooling step after harvesting, at temperatures in the order of 1-4 ° C, must necessarily take place gradually and for a long time, generally not less than 10-12 hours, in order to avoid dehydrating and damaging of the product, with a consequent limitation of the useful life of the produce due to waiting that the produce reaches the ideal preservation temperature.

A further drawback of post-production processing systems and plants is due to the fact that in order to keep the cold chain and keep the quality of the product, the temperature of the processing environments must be kept at temperatures around about 12 ° C, resulting in a discomfort for the operators involved in the processing steps and a greater energy input for the plant.

The object of this invention is to overcome and resolve the aforementioned drawbacks and operating limits.

More specifically, the object of the present invention is to provide a method and a plant for harvesting and post-production packaging of leafy crops by hydroponic technique capable of guaranteeing an increased resistance to the perishability of the final produce and a longer useful time for the distribution, marketing and consumption of the same.

A further possible object of the present invention is that of providing a method and a plant for harvesting and post-production packaging of leafy crops by hydroponic technique capable of obtaining an increased efficiency and quantity of production.

A further possible object of the present invention is to provide a method and a plant for harvesting and post-production packaging of leafy crops by hydroponic technique that can be easily integrated and automated with the MGS post-harvest processing systems and the like.

Last but not least possible object of the present invention is to provide a method and a plant for harvesting and post-production packaging of leafy crops by hydroponic technique that can be easily integrated and automated with the MGS post-harvest processing systems and the like.

A further possible object of the present invention is to provide a method and a plant for harvesting and post-production packaging of leafy crops by hydroponic technique capable of guaranteeing high level of resistance and reliability over time, such as to be easily and economically realized.

These and other objects are achieved by the method and by the plant for harvesting and post-production packaging of leafy crops by hydroponic technique of the present invention, according to the respective independent claims.

The constructive and operating characteristics of the method and plant for harvesting and post-production packaging of leafy crops by hydroponic technique may be better understood from the following detailed description, in which reference is made to the attached drawings, which represent preferred and non-limiting embodiments, wherein:

### BRIEF DESCRIPTION OF THE DRAWINGS

Figure 1 is a schematic plan view of an embodiment of the plant which implements the method for the harvesting and post-production packaging of leafy crops by hydroponic technique of the present invention;
Figure 2 is a schematic representation of the various steps of the method for the harvesting and post-production packaging of leafy crops by hydroponic technique of the present invention;
Figure 3 is a schematic view of a flow chart of the series of the steps of the method for the harvesting and post-production packaging of leafy crops by hydroponic technique of the present invention.

### DETAILED DESCRIPTION OF THE INVENTION

In the following description, the term "produce" refers to the cultivated plant in any post-production processing step, whether it is vital, severed from the roots from the supporting substrate, as well as put into bags and packaged.

The term "pre-cooling" refers to the cooling of the still vital plant, at the typical temperatures of the food cold chain, before cutting or peeling it, unlike the conventional cooling of the produce that is performed after cutting and harvesting the plant.

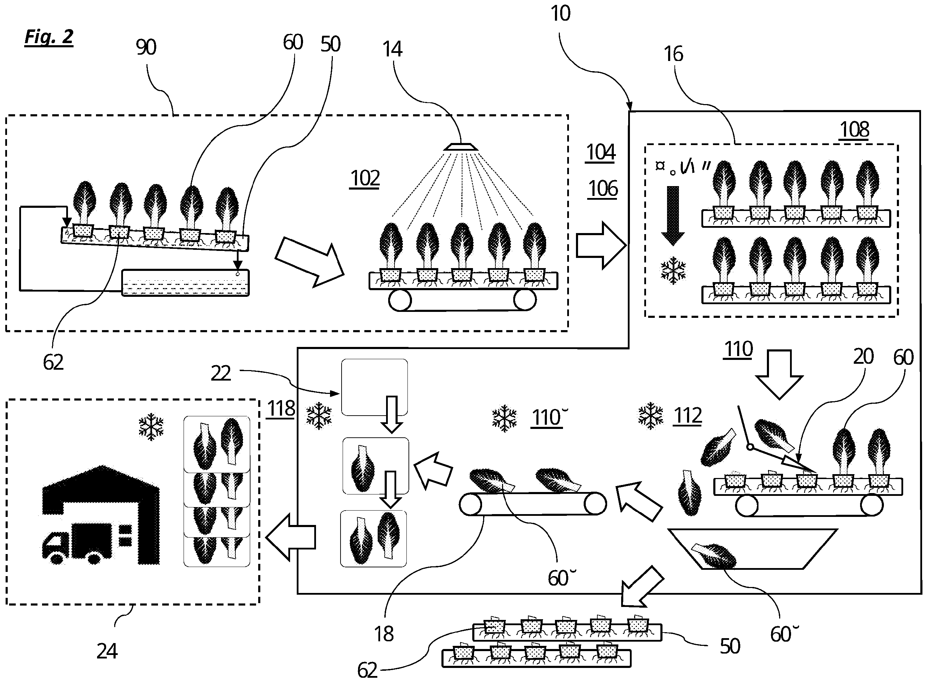

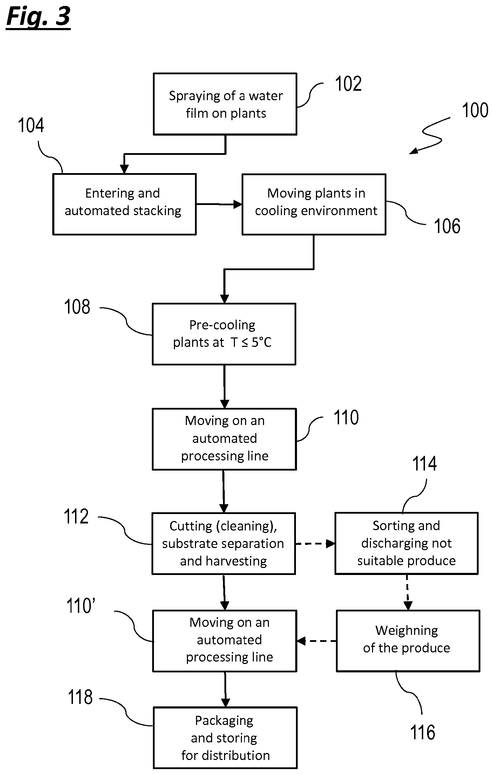

Referring first to Figure 3, the method of the present invention relates to an automated process for post-production processing applicable to production plants of hydroponic plant cultivations, generally suitable for leafy and tuft vegetables such as the many varieties of salad plants, and also suitable for other plants such as rocket, basil, spinach, and the like. Referring also to Figures 2 and 3, the method 100, which can be implemented in a related harvesting and post-production packaging system 10, comprises the following main steps:
- spraying 102 a plurality of vital plants 60 such to create a water film on leaves to keep them hydrated, said plants 60 being anchored by their respective roots to a supporting substrate 62;
- gradually pre-cooling 108 the temperature of vital plants 60 from about + 25 - 30 ° C, that is the plant temperature 60 in a greenhouse 90, at a temperature lower than or equal to +5 ° C within a period of about 12 hours, in order to slow down their development and ripening;
- cutting 112 and separating of the vital plants 60 from the peat layer and from the roots within a cutting and harvesting station;
- packaging (118) the plants (60) at a temperature not higher than 5 °C in an automated packaging station.

The method 100 can also comprise, after the spraying step 102, the further steps of:
- automated stacking 104 of a plurality of channels 50 on which the vital and ripe plants 60 are housed coming out from a greenhouse 90, said plants being arranged on a rack, preferably by a conventional lifting and moving system;
- moving 106 the stacked channels 50 with the plants and relevant supporting substrate 62 in a cooling environment;

The method 100 may also comprise, before and after the cutting step 112, the further steps of:
- moving 110, 110' the channels 50 with the cut plants 60' towards the subsequent steps and at a temperature generally not higher than 5 ° C, preferably on an automated processing line 18.

The spraying step 102 is preferably, but not limited thereto, performed in said greenhouse 90 at the outlet thereof and before entering the plant 10, in order to prevent the accumulation of humidity in the plant 10 itself. It is however generally advisable that the spraying step takes place before the pre-cooling step.

Said supporting substrate 62 is preferably made of natural peat but may be of any other natural or synthetic material with the same characteristics.

The method of the invention may comprise the following further steps, after the cutting step 112:
- sorting and discarding 114 not suitable or not entire produce;
- weighing 116 the produce.

Said channels 50, on which the vital plants 60 entering the plant 10 are housed, can be recognized and diversified by a bar code recognition system, such to be able to process different produce varieties that will then be recognized during the processings in the following steps.

The cutting step 112 of the plant generally takes place manually by operators and, together with said cutting step 112, a cleaning of the plant can also be included and performed.

According to the method 100 of the invention on the automated processing line, between the cutting step 112 and the separation of the produce roots and the peat supporting substrate 62 to the packaging 118 and storage for distribution, the produce is maintained during all the process of processing and packaging at an optimal preservation temperature, about close to that present in the pre-cooling environment (typically +5 C °), by a localized distribution system of cold air coming from the cooling environment, such to maintain a higher and comfortable temperature in the plant 10 environments with consequent benefit for the operators.

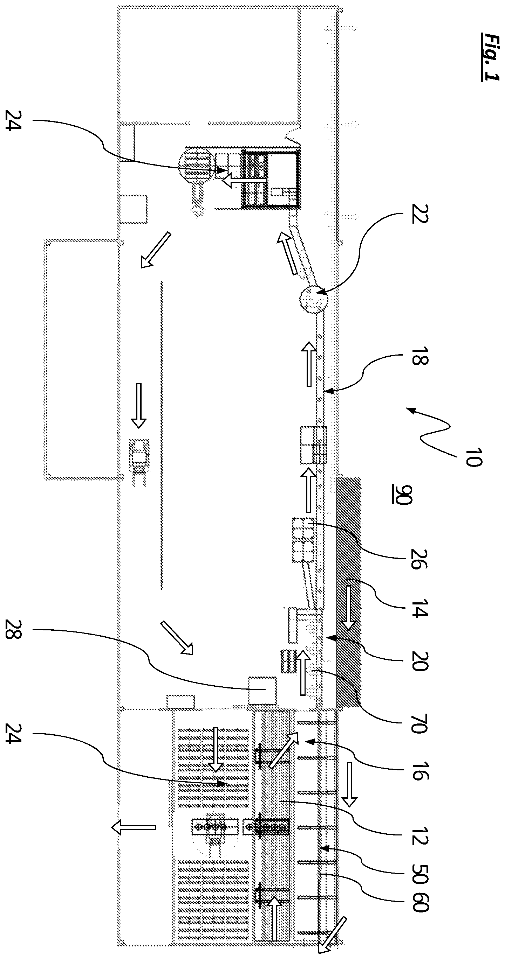

Referring now to Figures 1 and 2, the present invention also refers to a plant 10 for the harvesting and post-production packaging of leafy crops by hydroponic technique. For simplicity and clarity, the numerical references of identical elements and characteristics are shown in the attached drawings of only some of them.

The plant 10 is advantageously arranged at the outlet of a conventional hydroponicallycultivated automated greenhouse, preferably of the MGS type, and comprises:
- a cold-storage room 16, advantageously multi-rack, configured to cool a plurality of plants 60 at a temperature lower than 5 °C, said plants 60 being anchored by their respective roots to a supporting substrate 62, said plants 60 being configured to be housed in a plurality of channels 50;
- a cutting and harvesting station 20 configured to separate the plants 60 from the supporting substrate 62 and from roots;
- a packaging station 22 for the cut plants 60' configured to put the produce in bags;
wherein in said plant 10 the innovative characteristic is due to the fact that it comprises a spraying apparatus 14 configured to spraying the plants 60 such to create a water film on the leaves, said spraying apparatus 14 being preferably arranged outside the plant 10; and that said cold-storage room 16 defines a pre-cooling environment or storage room configured to bring the still vital plants 60 to the packaging temperature before being cut or severed in the cutting station 20.

The plant 10 further comprises:
- an automated moving and lifting apparatus 12 configured to receive and move a plurality of channels 50 coming out from the greenhouse 90, said channels 50 containing the vital plants 60 anchored to the relevant supporting substrate 62;
- a processing line 18, preferably a conveyor belt, of the channels 50 with the plants 60 for the automated movement of said channels 50 towards the following steps at a temperature not higher than 5 ° C.

The plant 10 further comprises after said packaging station 22:
- a palletization and storage station 24 for the packed produce for being distributed. The plant 10 may also comprise after said cutting station 20:
- a station 26 for sorting and discarding not suitable produce;
- a weighing station 28 configured to determine the weight of the produce.

The automated plant 10 may be further provided with an electronic system recognizing the channels 50 and the relevant transported variety of produce such to process different types of produce in the same processing line 18.

The apparatus 12 for the automated lifting and movement of the channels 50 is preferably a conventional mast lifting apparatus or column lifter, with a translating effect and provided with a bar code reader, said lifting apparatus 12 being configured to position said channels on a vertical shelves rack.

Said cold-storage room 16 preferably comprises a cooling apparatus with intermediary fluid with water having an ethylene glycol concentration suitable for food, and operating by means of aero-refrigerating devices arranged in the same cold-storage room 16, such to enable circulation and adequate homogeneous cooling of all the cold-storage room areas 16 and maintain a constant humidity rate during the pre-cooling step.

The processing line 18 preferably comprises a linear belt conveyer configured to convey the produce from the cold-storage room 16 to the following processing stations.

In order to maintain the environment of the plant 10 at a comfortable temperature for the operators 70, the plant 10 may advantageously comprise a local refrigeration system (not shown) of the processing line 18 configured to maintain the produce at a temperature equal to about that present in the pre-cooling environment (+5 ° C) of the cold-storage room 16, said local refrigeration system comprising a plurality of plastic-fabric sleeves (not shown) configured to distribute cold air, conveyed by micro oriented holes of said sleeves.

Said local refrigeration system of the line advantageously draws cold air to be distributed from the cold-storage room 16 having about the same temperature and humidity characteristics.

From the description of the method 100 and the plant 10 for the harvesting and the post-production packaging of leafy crops by hydroponic technique of the present invention, the operation described below is inferred.

With reference to Figure 1 and in particular to Figures 2 and 3, the method 100 and the plant 10 for the harvesting and post-production packaging of leafy crops by hydroponic technique is arranged at the outlet of a conventional automated hydroponic greenhouse 90.

Preferably, before the entrance of the channels 50 in the plant 10, the plants 60 are sprayed by a water-spraying step 102 with an aerosol nebulization, such to create a water film on the leaves in order to avoid dehydration of the plant 60 in the following pre-cooling step 108. The channels 50 with the plants 60 enter the plant 10 in sequence one at a time, arranging on the mast lifting apparatus 12 with translation effect provided with a bar code reader and, subsequently, said channels 50 with the plants 60 are stacked vertically on a shelving rack with the specific variety of produce stored by said bar code and arranged in the cold-storage room 16.

Subsequently, unlike a conventional post-production processing plant, the plants 60 are pre-cooled (before cutting) together with the roots and the supporting substrate 62 inside the cold-storage room 16, in which a slow down of the ripening of still vital plants 60 is also obtained.

The slow cooling in the cooling environment of the cold-storage room 16 brings the vital plants 60 from a temperature of about + 25 - 30 ° C, typical of a cultivation greenhouse 90, to a temperature of about + 5 ° C within a period of about 12 hours, typical temperatures for the processing of food products, maintaining a relative humidity higher than 95% of the output product, such to avoid deterioration and dehydration of the plants 60.

Once the desired temperature has been reached, the channels 50 with the plants 60 are conveyed towards the following cutting 112 and packaging 118 steps by the same automated lifting apparatus 12, entering in said pre-cooling cold-storage room 16. The channels 50 stacked in the rack of the cold-storage room 16 and comprising the plants 60 still having their roots inserted in the peat supporting substrate 62, are then withdrawn at the outlet in the opposite direction from said lifting apparatus 12 and recognized by the bar code reader. The peat substrate 62 is necessary in the cooling step because therein the nutrients are still present, which enable the plants 60 to survive during the stay in the cold-storage room 16, since at the entrance of the plant 10 in the channels 50 there is no longer nutritious solution. The bar code that identifies the specific variety of the produce chosen for that processing step.

The channels 50 with the still vital plants 60 are then arranged on the automated conveyor belt of said processing line 18 sent along it, one at a time, through a rapid sliding automatic door and exit from the pre-cooling cold-storage room 16 with plants 60 temperature about around + 5 ° C.

In the following cutting step 112, the operator 70 assigned to the cutting station 20 picks up the still vital plant 60 from the channel 50, optionally performs a cleaning operation, and cuts or severs the roots from the plant 60 eliminating at this point also the peat supporting substrate 62, which is moved away from the processing line 18 together with the channels 50 by a conveyor belt for recycling the channels (not shown).

Subsequently, the cut plant 60' is arranged on the conveyor belt of the processing line 18 and conveyed towards the automated packaging step or flow pack.

After the cutting step 112, further manual or automatic steps or operations may be performed in the appropriate stations 26 for sorting and discarding the not suitable produce and a station 28 for weighing the final produce.

From the cutting of the plant 60 to the packaging and palletization of the packaging containing the packages ready for being distributed, the produce thus packaged maintains an optimal storage temperature, that is a temperature about or equal to the final temperature of the pre-cooling cold-storage room 16,

The local refrigeration system is configured to maintain the cold chain on the processing line 18 and comprises plastic-fabric sleeves for distributing cold air (not shown), thanks to the micro-holes of the same sleeves that enable to orient and distribute cold air taken from the pre-cooling storage room locally on the produce with the same temperature and humidity characteristics. This enables a comfortable environment to be obtained in the processing plant 10, with consequent benefit for the operators 70, since the pre-cooled produce does not need to be processed and maintained in an environment at temperatures in the order of those of the cold-storage room 16 in order to keep unalterable the greater preservability conditions of the produce.

As can be seen from above, the advantages obtained by the method and the plant for harvesting and post-production packaging of leafy crops by hydroponic technique of the present invention are obvious.

The method and the plant for harvesting and post-production packaging of leafy crops by hydroponic technique is particularly advantageous because it enables, for the same produce obtained with a plant according to the prior art, to increase the preservation time and freshness of the final produce, and therefore its duration, of at least 12 hours thanks to the pre-cooling of the plant in a still vital condition before cutting.

A further advantage of the method and the plant for harvesting and post-production packaging of leafy crops by hydroponic technique of the present invention is due to the fact that it can be directly integrated and implemented with the described conventional MGS automated systems of hydroponic cultivations, even already existing, as a complete cooperation of the plant's development automation in the greenhouse in created with that of post-production processing plant.

A further advantage of the method and the plant for harvesting and post-production packaging of leafy crops by hydroponic technique of the present invention is that of being able to arrange, thanks to pre-cooling, an already cold produce, which does not require further deep refrigeration, thus enabling to keep a higher and healthier temperature in the processing environment for the operators involved in the processing steps.

Although the invention has been described above with particular reference to some preferred embodiments, given byway of non-limiting example, numerous modifications and variations will be apparent to a person skilled in the art in the light of the above description. The present invention is defined by the protective scope of the following claims.

## Claims

1. Method (100) for harvesting and post-production packaging of leafy crops by hydroponic technique comprising the steps of:
- spraying (102) a plurality of vital plants (60) such to create a water film on leaves to keep them hydrated, said plants (60) being anchored by their respective roots to a supporting substrate (62);
- gradually pre-cooling (108) the vital plants (60) at a temperature lower than or equal to +5 °C within a period of about 12 hours, in order to slow down their development and ripening;
- cutting (112) and separating the plants (60) from the supporting substrate (62) and from roots.
- packaging (118) the plants (60) at a temperature not higher than 5 °C.

2. Method (100) according to claim 1, comprising after the spraying step (102) the further steps of:
- automated stacking (104) of a plurality of channels (50) on which the vital and ripe plants (60) are housed coming out from a greenhouse (90).
- moving (106) the stacked channels (50) with the plants (60) and relevant supporting substrate (62) in a cooling environment;

3. Method (100) according to claim 1, comprising before and after the cutting step (112) the further steps of:
- moving (110, 110') the channels (50) with the cut plants (60') to subsequent processing steps at a temperature not higher than 5 °C.

4. Method (100) according to claim 1, comprising after the cutting step (112) the further step of:
- sorting and discarding (114) not suitable or not entire produce.

5. Method (100) according to claim 1, comprising after the cutting step (112) the further step of:
- weighing (116) the produce.

6. Method (100) according to claim 2, wherein said channels (50) entering the processing plant are recognized by a barcode system such to be able to process different produce varieties.

7. Method (100) according to claim 1, wherein together with the cutting step (112) a step manually cleaning the plant is performed.

8. Method (100) according to claim 1, wherein the cutting step (112) and packaging step (118) are manually performed by operators.

9. Method (100) according to one of the preceding claims, wherein the temperature of the produce is maintained on the processing line at an optimal preservation temperature, about close to the one present in said pre-cooling environment.

10. Plant (10) for the harvesting and post-production packaging of leafy crops by hydroponic technique comprising:
- a cold-storage room (16) configured to cool a plurality of plants (60) at a temperature lower than 5 °C, said plants (60) being anchored by their respective roots to a supporting substrate (62);
- a cutting and harvesting station (20) configured to harvest and separate the plants (60) from the supporting substrate (62) and from roots;
said plant (10) **characterized in that** it comprises a spraying apparatus (14) configured to spray the plants (60) and that said cold-storage room (16) is a pre-cooling storage room configured to bring still vital plants (60) to the packaging temperature before being cut in the cutting station (20).

11. Plant (10) according to claim 10, further comprising:
- an automated moving and lifting apparatus (12) configured to receive and move a plurality of channels (50) coming out from the greenhouse (90), said channels (50) containing the vital plants (60) anchored to the relevant supporting substrate (62);
- a processing line (18) configured for the automated movement of the channels (50) with the plants (60) towards the following steps at a temperature not higher than 5°C.

12. Plant (10) according to claim 10, further comprising in sequence:
- a packaging station (22) for the cut plants (60') configured to put the produce in bags.
- a palletization and storage station (24) for the packed produce for being distributed.

13. Plant (10) according to claim 10, further comprising after said cutting station (20):
- a station (26) for sorting and discarding not suitable produce;
- a weighing station (28) configured to determine the weight of the produce.

14. Plant (10) according to claim 10, comprising an electronic system recognizing the channels (50) and the relevant transported variety of produce such to process different types of produce.

15. Plant (10) according to claim 11, wherein said apparatus (12) for the automated lifting and movement of the channels (50) is a conventional mast lifting apparatus or column lifter.

16. Plant (10) according to claim 10, wherein said cold-storage room (16) comprises a multi-rack intermediate fluid refrigeration system, provided with air-coolers arranged in said cold-storage room (16), such to enable homogeneous cooling and circulation and a constant humidity rate.

17. Plant (10) according to claim 11, wherein said processing line (18) comprises a linear belt conveyer configured to convey the produce from the cold-storage room (16) to the following processing stations.

18. Plant (10) according to claim 11, comprising a local refrigeration system for the processing line (18) configured to keep the produce at a temperature equal to about the one present in the environment of said cold-storage room (16).

19. Plant (10) according to claim 18, wherein said local refrigeration system of said processing line (18) comprising a plurality of plastic-fabric sleeves configured to distribute cold air through oriented micro-holes of said sleeves.

20. Plant (10) according to claim 18, wherein said local refrigeration system of said processing line (18) is configured to take cold air to be distributed from the cold-storage room (16).

## Patentansprüche

1. Verfahren (100) zum Ernten und Verpacken von Blattfrüchten nach der Produktion durch hydroponischen Technik, umfassend die Schritte:
- des Besprühens (102) einer Vielzahl von vitalen Pflanzen (60), um einen Wasserfilm auf den Blättern zu erzeugen, um sie hydratisiert zu halten, wobei die Pflanzen (60) durch ihre jeweiligen Wurzeln an einem tragenden Substrat (62) verankert sind;
- allmähliches Vorkühlen (108) der vitalen Pflanzen (60) auf eine Temperatur kleiner oder gleich +5 °C innerhalb eines Zeitraums von etwa 12 Stunden, um ihre Entwicklung und Reifung zu verlangsamen;
- Schneiden (112) und Trennen der Pflanzen (60) von dem tragenden Substrat (62) und von den Wurzeln;
- Verpacken (118) der Pflanzen (60) bei einer Temperatur von nicht mehr als 5 °C.

2. Verfahren (100) nach Anspruch 1, umfassend nach dem Besprühungsschritt (102) die weiteren Schritte:
- Automatisches Stapeln (104) einer Vielzahl von Kanälen (50), in denen die vitalen und reifen Pflanzen (60) untergebracht sind, die aus einem Gewächshaus (90) kommen;
- Bewegen (106) der gestapelten Kanäle (50) mit den Pflanzen (60) und dem entsprechenden Trägersubstrat (62) in eine Kühlumgebung;

3. Verfahren (100) nach Anspruch 1, umfassend vor und nach dem Schneideschritt (112) die weiteren Schritte von:
- Bewegen (110, 110') der Kanäle (50) mit den geschnittenen Pflanzen (60') zu nachfolgenden Verarbeitungsschritten bei einer Temperatur von nicht mehr als 5 °C.

4. Verfahren (100) nach Anspruch 1, umfassend nach dem Schneideschritt (112) den weiteren Schritt des:
- Sortieren und Aussortieren (114) von nicht geeigneten oder nicht ganzen Produkten.

5. Verfahren (100) nach Anspruch 1, umfassend nach dem Schneideschritt (112) den weiteren Schritt des:
- Wiegen (116) des Produkts.

6. Verfahren (100) nach Anspruch 2, wobei die in die Verarbeitungsanlage eintretenden Kanäle (50) durch ein Barcodesystem erkannt werden, so dass sie in der Lage sind verschiedene Sorten von Produkten zu verarbeiten.

7. Verfahren (100) nach Anspruch 1, wobei zusammen mit dem Schneideschritt (112) ein Schritt zur manuellen Reinigung der Anlage durchgeführt wird.

8. Verfahren (100) nach Anspruch 1, wobei der Schneideschritt (112) und der Verpackungsschritt (118) manuell von Bedienern durchgeführt werden.

9. Verfahren (100) nach einem der vorhergehenden Ansprüche, wobei die Temperatur des Produkts in der Verarbeitungslinie auf einer optimalen Konservierungstemperatur gehalten wird, die etwa der in der Vorkühlumgebung vorhandenen Temperatur entspricht.

10. Anlage (10) für die Ernte und Nachverpackung von Blattfrüchten durch hydroponischen Technik, umfassend:
- einen Kühlraum (16), der so konfiguriert ist, dass er eine Vielzahl von Pflanzen (60) auf eine Temperatur von weniger als 5 °C kühlt, wobei die Pflanzen (60) mit ihren jeweiligen Wurzeln an einem tragenden Substrat (62) verankert sind;
- eine Schneide- und Erntestation (20), die zum Ernten und Trennen der Pflanzen (60) von dem Trägersubstrat (62) konfiguriert ist (60), um sie von dem Trägersubstrat (62) und von den Wurzeln zu trennen;
wobei die Anlage (10) **dadurch gekennzeichnet ist, dass** sie eine Sprühvorrichtung (14) umfasst, die konfiguriert ist, um die Pflanzen (60) zu besprühen, und dass der Kühlraum (16) ein Vorkühl-Lagerraum ist, der konfiguriert ist, um noch vitale Pflanzen (60) auf die Verpackungstemperatur zu bringen, bevor sie in der Schneidestation (20) geschnitten werden.

11. Anlage (10) nach Anspruch 10, ferner umfassend:
- eine automatisierte Bewegungs- und Hebevorrichtung (12), die so konfiguriert ist, dass sie eine Vielzahl von Kanälen (50), die aus dem Gewächshaus (90) herauskommen, aufnimmt und bewegt, wobei die Kanäle (50) die vitalen Pflanzen (60) enthalten, die an dem entsprechenden Trägersubstrat (62) verankert sind;
- eine Verarbeitungslinie (18), die ausgebildet ist für die automatische Bewegung der Kanäle (50) mit den Pflanzen (60) zu den folgenden Schritten bei einer Temperatur von nicht mehr als 5°C.

12. Anlage (10) nach Anspruch 10, ferner umfassend
- eine Verpackungsstation (22) für die geschnittenen Pflanzen (60'), die so konfiguriert ist, dass die Produkte in Beutel verpackt werden;
- eine Palettier- und Lagerstation (24) für die verpackten Produkte, die verteilt werden sollen.

13. Anlage (10) nach Anspruch 10, ferner umfassend nach der Schneidestation (20)
- eine Station (26) zum Sortieren und Aussortieren von nicht geeigneten Produkten
- eine Wiegestation (28), die so konfiguriert ist, dass sie das Gewicht des Produkts bestimmt.

14. Anlage (10) nach Anspruch 10, umfassend ein elektronisches System, das die Kanäle (50) und die jeweilige transportierte Sorte von Produkten erkennt, um verschiedene Arten von Produkten zu verarbeiten.

15. Anlage (10) nach Anspruch 11, wobei die Vorrichtung (12) zum automatisierten Heben und Bewegung der Kanäle (50) eine herkömmliche Masthebevorrichtung oder Säulenhebevorrichtung ist.

16. Anlage (10) nach Anspruch 10, wobei der Kühlraum (16) ein Mehrregal-Zwischenfluid-Kühlsystem umfasst, das mit in dem Kühlraum (16) angeordneten Luftkühlern versehen ist, für eine homogene Kühlung und Zirkulation und eine konstante Feuchtigkeitsrate.

17. Anlage (10) nach Anspruch 11, wobei die Verarbeitungslinie (18) einen linearen Bandförderer umfasst, der so konfiguriert ist, dass er die Produkte aus dem Kühlraum (16) zu den folgenden Verarbeitungsstationen befördert.

18. Anlage (10) nach Anspruch 11, umfassend ein lokales Kühlsystem für die Verarbeitungslinie (18), das so konfiguriert ist, dass es das Produkt auf einer Temperatur hält, die etwa derjenigen, die in der Umgebung des Kühlraums (16) herrscht.

19. Anlage (10) nach Anspruch 18, wobei das lokale Kühlsystem der Verarbeitungslinie (18) eine Vielzahl von Kunststoff-Gewebe-Hüllen umfasst, die so konfiguriert sind, dass sie kalte Luft durch orientierte Mikrolöcher der Hüllen verteilen.

20. Anlage (10) nach Anspruch 18, wobei das lokale Kühlsystem der Verarbeitungslinie (18) konfiguriert ist, um zu verteilende kalte Luft aus dem Kühlraum (16) zu entnehmen.

## Revendications

1. Procédé (100) de récolte et de conditionnement post-production de cultures à feuilles par technique hydroponique, comprenant les étapes :
- pulvériser (102) une pluralité de plantes vivantes (60) de façon à créer un film d'eau sur des feuilles pour les maintenir hydratées, lesdites plantes (60) étant ancrées par leurs racines respectives à un substrat de support (62) ;
- pré-refroidir progressivement (108) les plantes vivantes (60) à une température inférieure ou égale à +5°C dans une période d'environ 12 heures, afin de ralentir leur développement et leur maturation ;
- couper (112) et séparer les plantes (60) du substrat de support (62) et des racines ; et
- conditionner (118) les plantes (60) à une température ne dépassant pas 5°C.

2. Procédé (100) selon la revendication 1, comprenant, après l'étape de pulvérisation (102), les étapes supplémentaires :
- empiler (104) de manière automatisée une pluralité de canaux (50), sur lesquels sont reçues les plantes vivantes et mûres (60), sortant d'une serre (90) ; et
- déplacer (106) les canaux empilés (50) avec les plantes (60) et le substrat de support correspondant (62) dans un environnement de refroidissement.

3. Procédé (100) selon la revendication 1, comprenant, avant et après l'étape de coupe (112), les étapes supplémentaires :
- déplacer (110, 110') les canaux (50) avec les plantes coupées (60') vers des étapes de traitement ultérieures à une température ne dépassant pas 5°C.

4. Procédé (100) selon la revendication 1, comprenant, après l'étape de coupe (112), l'étape supplémentaire :
- trier et mettre au rebut (114) des produits non appropriés ou non entiers.

5. Procédé (100) selon la revendication 1, comprenant, après l'étape de coupe (112), l'étape supplémentaire :
- peser (116) les produits.

6. Procédé (100) selon la revendication 2, dans lequel lesdits canaux (50) entrant dans l'installation de traitement sont reconnus par un système de codes à barres de façon à être apte à traiter différentes variétés de produits.

7. Procédé (100) selon la revendication 1, dans lequel, conjointement à l'étape de coupe (112), une étape de nettoyage manuel de la plante est réalisée.

8. Procédé (100) selon la revendication 1, dans lequel l'étape de coupe (112) et l'étape de conditionnement (118) sont réalisées manuellement par des opérateurs.

9. Procédé (100) selon l'une des revendications précédentes, dans lequel la température des produits est maintenue sur la ligne de traitement à une température de conservation optimale, environ proche de celle présente dans ledit environnement de pré-refroidissement.

10. Installation (10) pour la récolte et le conditionnement post-production de cultures à feuilles par technique hydroponique, comprenant :
- une chambre frigorifique (16) configurée pour refroidir une pluralité de plantes (60) à une température inférieure à 5°C, lesdites plantes (60) étant ancrées par leurs racines respectives à un substrat de support (62) ;
- un poste de coupe et de récolte (20) configuré pour récolter et séparer les plantes (60) du substrat de support (62) et des racines ;
ladite installation (10) étant **caractérisée par le fait qu'**elle comprend un appareil de pulvérisation (14) configuré pour une pulvérisation sur les plantes (60), et **par le fait que** ladite chambre frigorifique (16) est une chambre de stockage de pré-refroidissement configurée pour amener des plantes encore vivantes (60) à la température de conditionnement avant d'être coupées dans le poste de coupe (20) .

11. Installation (10) selon la revendication 10, comprenant en outre :
- un appareil de déplacement et de levage automatisés (12) configuré pour recevoir et déplacer une pluralité de canaux (50) sortant de la serre (90), lesdits canaux (50) contenant les plantes vivantes (60) ancrées au substrat de support correspondant (62) ;
- une ligne de traitement (18) configurée pour le déplacement automatisé des canaux (50) avec les plantes (60) vers les étapes suivantes à une température ne dépassant pas 5°C.

12. Installation (10) selon la revendication 10, comprenant en outre en séquence :
- un poste de conditionnement (22) pour les plantes coupées (60'), configuré pour mettre les produits dans des sacs ; et
- un poste de palettisation et de stockage (24) des produits conditionnés en vue de leur distribution.

13. Installation (10) selon la revendication 10, comprenant en outre, après ledit poste de coupe (20) :
- un poste (26) pour trier et mettre au rebut des produits non appropriés ; et
- un poste de pesage (28) configuré pour déterminer le poids des produits.

14. Installation (10) selon la revendication 10, comprenant un système électronique reconnaissant les canaux (50) et la variété de produits transportée correspondante de façon à traiter différents types de produits.

15. Installation (10) selon la revendication 11, dans laquelle ledit appareil (12) pour le levage et le déplacement automatisés des canaux (50) est un appareil de levage à mât classique ou un dispositif de levage à colonne.

16. Installation (10) selon la revendication 10, dans laquelle ladite chambre frigorifique (16) comprend un système de réfrigération de fluide intermédiaire à étagères multiples, comportant des refroidisseurs d'air disposés dans ladite chambre frigorifique (16), de façon à permettre un refroidissement et une circulation homogènes et un taux d'humidité constant.

17. Installation (10) selon la revendication 11, dans laquelle ladite ligne de traitement (18) comprend un transporteur à courroie linéaire configuré pour transporter les produits de la chambre frigorifique (16) aux postes de traitement suivants.

18. Installation (10) selon la revendication 11, comprenant un système de réfrigération local pour la ligne de traitement (18), configuré pour maintenir les produits à une température égale à environ celle présente dans l'environnement de ladite chambre frigorifique (16).

19. Installation (10) selon la revendication 18, dans laquelle ledit système de réfrigération local de ladite ligne de traitement (18) comprend une pluralité de gaines en matière plastique-tissu configurées pour distribuer de l'air froid à travers des micro-trous orientés desdites gaines.

20. Installation (10) selon la revendication 18, dans laquelle ledit système de réfrigération local de ladite ligne de traitement (18) est configuré pour prendre de l'air froid à distribuer à partir de la chambre frigorifique (16).
